# EUROPÄISCHE PATENTANMELDUNG

(11) **EP 2 168 529 A2**
(43) Veröffentlichungstag der Anmeldung: **31.03.2010**
(21) Anmeldenummer: 09011528.8
(22) Anmeldetag: 09.09.2009
(51) Int. Cl.: A61C 8/00

(54) **Vorrichtung zum Explantieren eines Dentalimplantates aus einem menschlichen oder tierischen Knochen**

(30) Priorität: 25.09.2008 DE 102008049012
(71) Anmelder: Bagambisa, Frank, 53173 Bonn (DE)
(72) Erfinder: Bagambisa, Frank, 53173 Bonn (DE)
(74) Vertreter: Walther, Walther & Hinz GbR

(57) **Zusammenfassung**

Gegenstand der Erfindung ist eine Vorrichtung zum Explantieren eines Dentalimplantates aus einem menschlichen oder tierischen Knochen, mit einem Trepanbohrer (1), an dessen Stirnseite eine Bohrschneide (2) ausgebildet ist. Eine Vorrichtung zu schaffen mit der Dentalimplantate präzise ausgebohrt werden können, wird erreicht durch einen am Dentalimplantat (7) anbringbaren Führungsstift (8) und durch ein am Trepanbohrer (1) angebrachtes Führungselement (5), wobei das Führungselement (5) derart mit dem Führungsstift (8) zusammenwirkt, dass der Trepanbohrer (1) in Axialrichtung des Führungsstiftes (8) geführt wird.

## Beschreibung

Die vorliegende Erfindung betrifft eine Vorrichtung gemäß dem Oberbegriff der Ansprüche 1 und 8.

Als Ersatz für fehlende Zähne gehört es zum Stand der Technik, künstliche Dentalimplantate aus Titan, Keramik oder einem anderen geeigneten Material in den Kieferknochen zu implantieren. Manchmal ist es dagegen auch notwendig, ein vorhandenes Dentalimplantat wieder zu entfernen, zum Beispiel wenn eine Entzündung oder ein sleeping Implantat vorliegt.
In diesem Fall kann das Dentalimplantat mit einem Hohlbohrer, zum Beispiel einem Trepanbohrer, wieder ausgebohrt werden. Dabei wird ein Trepanbohrer gewählt, dessen Innendurchmesser nur wenig größer als der größte Außendurchmesser des Dentalimplantates ist. Dieser Trepanbohrer wird dann zunächst nach Augenmaß des Arztes derart auf das Dentalimplantat gehalten, dass der Trepanbohrer zumindest ansatzweise den oberen Teil des Dentalimplantates umgreift. Während des Bohrvorganges wird der Trepanbohrer dann vom Dentalimplantat geführt. Jedoch kommt es vor, dass die Bohrung dennoch schief verläuft, so dass in manchen Fällen sogar das Dentalimplantat zertrennt wird, was einen aufwendigen chirurgischen Eingriff zur Entfernung der Reste des Dentalimplantates zur Folge hat.

Davon ausgehend liegt der vorliegenden Erfindung die Aufgabe zu Grunde, eine Vorrichtung der eingangs genannten Art zu schaffen, mit der Dentalimplantate achsparallel ausgebohrt werden können.

Als technische Lösung dieser Aufgabe wird erfindungsgemäß eine Vorrichtung mit den Merkmalen des Anspruches 1 oder den Merkmalen des Anspruches 8 vorgeschlagen. Vorteilhafte Weiterbildungen dieser Vorrichtungen sind den jeweiligen Unteransprüchen zu entnehmen.

Eine nach dieser technischen Lehre ausgebildete Vorrichtung hat den Vorteil, dass durch das Zusammenwirken von Führungsstift und Führungselement bzw. von Führungszylinder und Trepanbohrer eine zuverlässige Führung des Trepanbohrers realisiert wird, so dass dieser entsprechend geführt koaxial zum Dentalimplantat in den Knochen eindringen kann. Hierdurch wird erreicht, dass um das Dentalimplantat nicht beschädigt wird und ohne großen Aufwand vollständig entfernt werden kann.

Ein weiterer Vorteil besteht darin, dass durch das achsparallele Ausbohren um des Implantat herum auch eine gewisse Menge der Knochensubstanz mit ausgebohrt wird, wobei die Knochensubstanz um das Implantat herum gleichmäßig stark ist. Je nach Größe des Trepanbohrers kann der um das Implantat herum bestehende Gürtel aus Knochensubstanz mehr oder weniger dick sein.

In einer bevorzugten Ausführungsform ist das Führungselement hohlzylindrisch ausgebildet, wobei die lichte Weite des Führungselementes korrespondierend zum Durchmesser des Führungsstiftes gewählt ist. Dies hat den Vorteil, dass das am Trepanbohrer angebrachte Führungselement den in dem Dentalimplantat angebrachten Führungsstift in sich aufnimmt, um somit eine zuverlässige Führung des Trepanbohrers zu realisieren. Es versteht sich, dass dabei die lichte Weite des Führungselementes so viel größer als der Durchmesser des Führungsstiftes ausgebildet ist, dass der Führungsstift problemlos in das Führungselement eingeführt werden kann und gleichzeitig soll die lichte Weite des Führungselementes aber nicht sehr viel größer als der Durchmesser des Führungsstiftes gewählt sein, damit der Führungsstift nur mit einem geringen Spiel im Führungselement geführt werden kann. Analoges gilt für den Führungszylinder und den Trepanbohrer.

Dabei hat es sich als vorteilhaft erwiesen, das Führungselement koaxial am Trepanbohrer anzubringen und auch den Führungsstift koaxial im Dentalimplantat anzubringen. Hierdurch wird erreicht, dass der Trepanbohrer koaxial zum Dentalimplantat geführt wird, so dass der Abstand zwischen dem Dentalimplantat und dem Inneren des Trepanbohrers über den Umfang des Dentalimplantates gesehen annähernd gleich ist.

In einer bevorzugten Ausführungsform ist das Führungselement über drei bis acht, vorzugsweise vier Stege am Trepanbohrer gehalten. Durch diese Stege wird erreicht, dass der Trepanbohrer nach oben hin offen ist, so das hierdurch eventuelle beim Eingriff benötigte Materialien zugeführt oder andere Materialien abgeführt werden können.

In einer weiteren, bevorzugten Ausführungsform reicht der Führungsstift bereits in das Führungselement hinein, wenn der Trepanbohrer noch am Knochen anliegt. Dies hat den Vorteil, dass eine Führung des Trepanbohrers koaxial zum Dentalimplantat bereits erreicht wird, bevor die eigentliche Bohrung beginnt, so dass ein Nachkorrigieren während des Bohrvorgangs überflüssig ist.

In noch einer weiteren, bevorzugten Ausführungsform ist das Führungselement mindestens so weit von der Bohrschneide beabstandet, wie das Dentalimplantat lang ist. Dies hat den Vorteil, dass der Trepanbohrer so weit in den Knochen eindringen kann, bis das untere Ende des Dentalimplantates erreicht ist, so dass das Dentalimplantat vollständig ausgebohrt werden kann.

In einer anderen, bevorzugten Ausführungsform ist das Führungselement einstückig mit dem Trepanbohrer verbunden, was zur Vereinfachung der Fertigung des Trepanbohrers beiträgt.

In einer weiteren, ganz besonders bevorzugten Ausführungsform wird anstelle des Führungsstiftes ein Führungszylinder verwendet, dessen Außendurchmesser dem lichten Innendurchmesser des Trepanbohrers entspricht. Dies hat den Vorteil, dass ein handelsüblicher Trepanbohrer verwendet werden kann und dass dennoch eine koaxiale Führung des Trepanbohrers erreicht wird.

In einer vorteilhaften Weiterbildung sind am Umfang des Führungszylinders vorzugsweise zwei (mindestens jedoch eine) Führungsflächen ausgebildet, mit denen der Führungszylinder im Inneren des Trepanbohrers zur Anlage klommt und geführt wird. Diese Führungsflächen sind dabei voneinander beabstandet, um ein Verkanten zu vermeiden.

Weitere Vorteile der erfindungsgemäßen Vorrichtungen ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine geschnitten dargestellte Seitenansicht einer ersten Ausführungsform einer erfindungsgemäßen Vorrichtung zusammen mit einem geschnitten dargestellten Dentalimplantat in einem Kieferknochen vor Beginn des Bohrvorganges;
- Fig. 2: die Vorrichtung gemäß Fig. 1 unmittelbar vor dem Eindringen des Trepanbohrers in den Kieferknochen;
- Fig. 3: die Vorrichtung gemäß Fig. 1 nach Abschluss des Bohrvorganges;
- Fig. 4: die Vorrichtung gemäß Fig. 1 mit dem herausgeführten Trepanbohrer;
- Fig. 5: eine geschnitten dargestellte Seitenansicht einer zweiten Ausführungsform einer erfindungsgemäßen Vorrichtung zusammen mit einem geschnitten dargestellten Dentalimplantat in einem Kieferknochen vor Beginn des Bohrvorganges;
- Fig. 6: die Vorrichtung gemäß Fig. 5 unmittelbar vor dem Eindringen des Trepanbohrers in den Kieferknochen;
- Fig. 7: die Vorrichtung gemäß Fig. 5 nach Abschluss des Bohrvorganges;
- Fig. 8: die Vorrichtung gemäß Fig. 5 mit dem herausgeführten Trepanbohrer;
- Fig. 9: eine geschnitten dargestellte Seitenansicht einer dritten Ausführungsform einer erfindungsgemäßen Vorrichtung zusammen mit einem geschnitten dargestellten Dentalimplantat in einem Kieferknochen vor Beginn des Bohrvorganges;
- Fig. 9a: eine geschnitten dargestellte Draufsicht auf die Vorrichtung gemäß Fig. 9, geschnitten entlang Linie IXa bis IXa in Fig. 9;
- Fig. 9b: eine geschnitten dargestellte Draufsicht auf die Vorrichtung gemäß Fig. 9, geschnitten entlang Linie IXb bis IXb in Fig. 9;
- Fig. 10: die Vorrichtung gemäß Fig. 9 nach Abschluss des Bohrvorganges;
- Fig. 11: eine geschnitten dargestellte Seitenansicht einer vierten Ausführungsform einer erfindungsgemäßen Vorrichtung zusammen mit einem geschnitten dargestellten Dentalimplantat in einem Kieferknochen vor Beginn des Bohrvorganges;

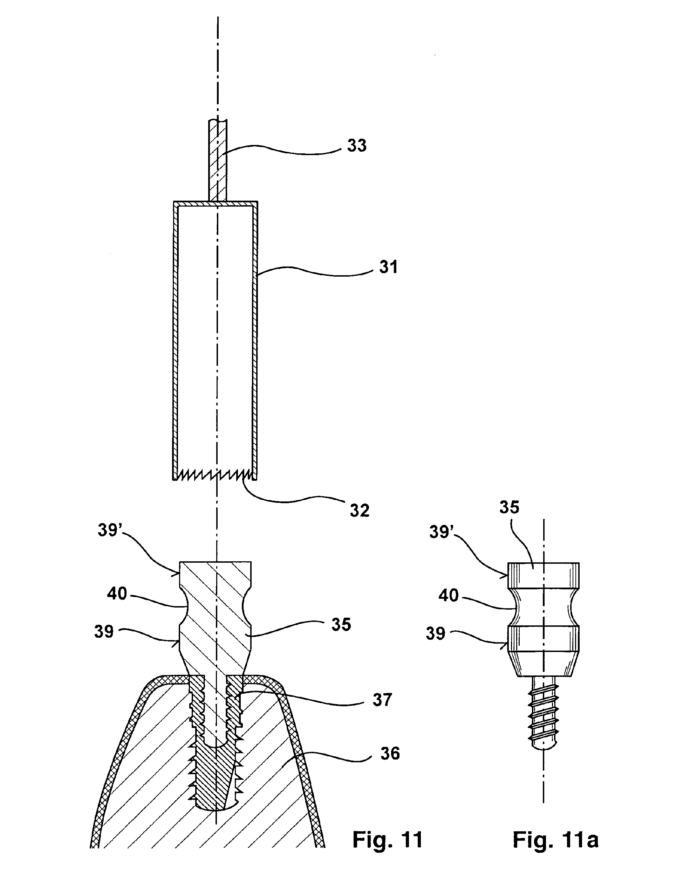

- Fig. 11: a eine Seitenansicht des Führungszylinders der Vorrichtung gemäß Fig. 11;

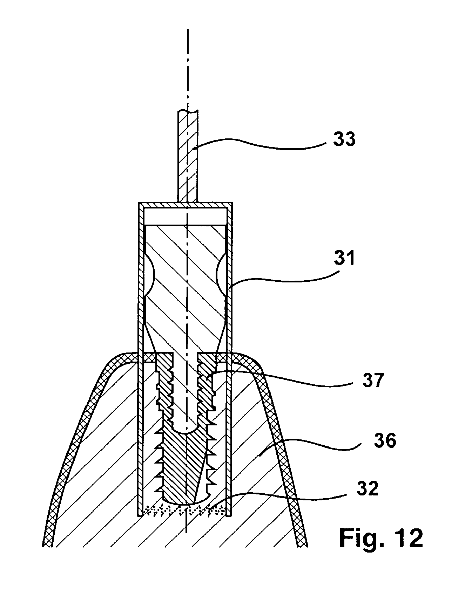

- Fig. 12: die Vorrichtung gemäß Fig. 11 nach Abschluss des Bohrvorganges.

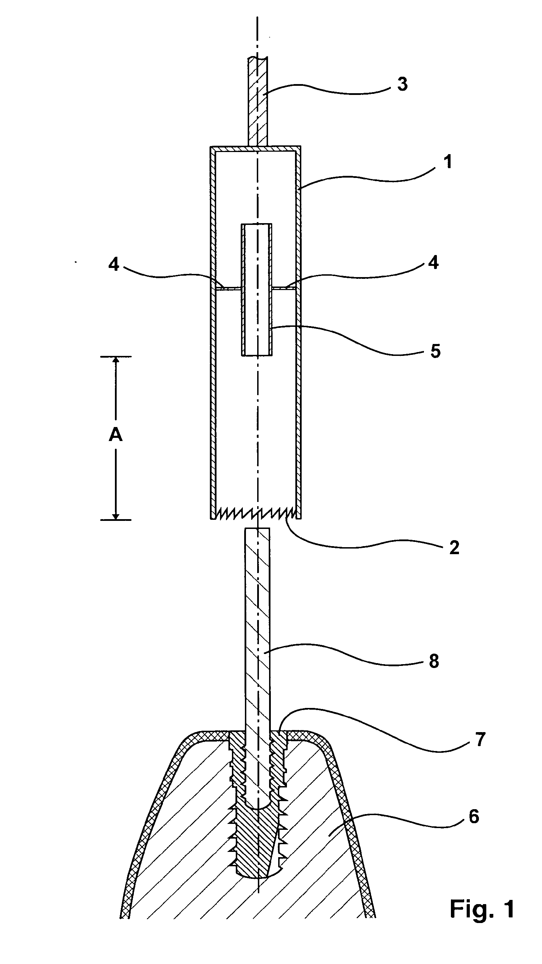

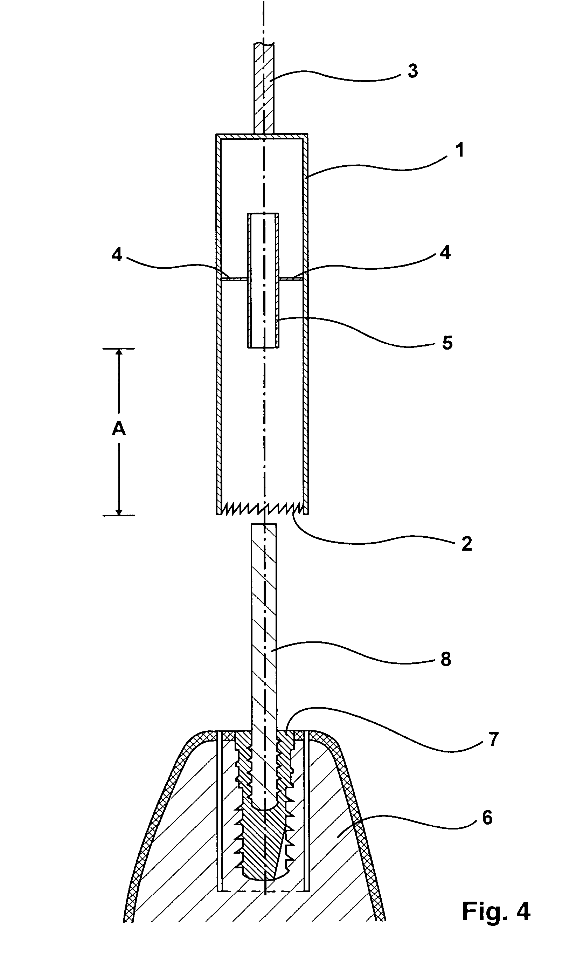

In den Fig. 1 bis 4 ist eine erste Ausführungsform einer erfindungsgemäßen Vorrichtung zu verschiedenen Zeitpunkten dargestellt. Diese Vorrichtung umfasst einen hohlzylindrischen Trepanbohrer 1, an dessen Stirnseite eine Bohrschneide 2 ausgebildet ist. Der Bohrschneide 2 gegenüberliegend ist am Trepanbohrer 1 eine Bohreraufnahme 3 angebracht, mittels derer der Trepanbohrer 1 mit einem entsprechenden, hier nicht näher dargestellten Antrieb gekoppelt werden kann. Im Inneren des Trepanbohrers 1 ist über vier Stege 4 ein Führungselement 5 gehalten. Dieses Führungselement 5 ist hohlzylindrisch ausgebildet und koaxial zum Trepanbohrer 1 angeordnet.

Im Kieferknochen 6 ist ein Dentalimplantat 7 implantiert und in dieses Dentalimplantat 7 ist ein Führungsstift 8 eingesetzt. Dabei ist der Führungsstift 8 koaxial zum Dentalimplantat 7 angeordnet, d. h. die virtuelle Längsachse des Führungsstiftes 8 und die virtuelle Längsachse des Dentalimplantates 7 sind identisch.

Der Abstand A von der Stirnseite des Trepanbohrers 1 bis zur unteren Stirnseite des Führungselementes 5 ist mindestens so groß, wie das Dentalimplantat 7 lang ist, während der Führungsstift 8 deutlich länger als der Abstand A ist, so dass der Führungsstift 8 bereits in das Führungselement 5 hineinreicht, wenn der Trepanbohrer 1 noch am Kieferknochen 6 anliegt.

In einer anderen, hier nicht dargestellten Ausführungsform entspricht der Abstand A im wesentlichen der Länge des Dentalimplantates 7.

Der Ablauf einer solchen Bohrung wird nachfolgend im Detail beschrieben:

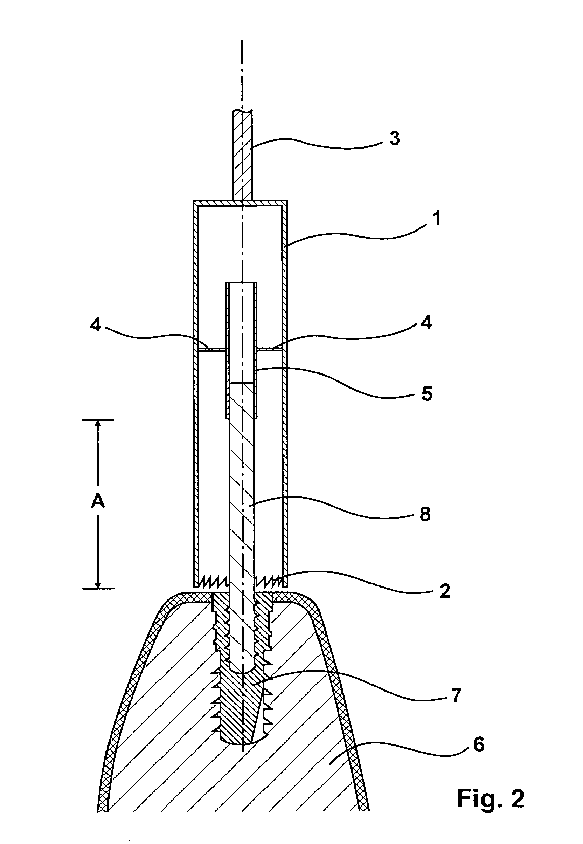

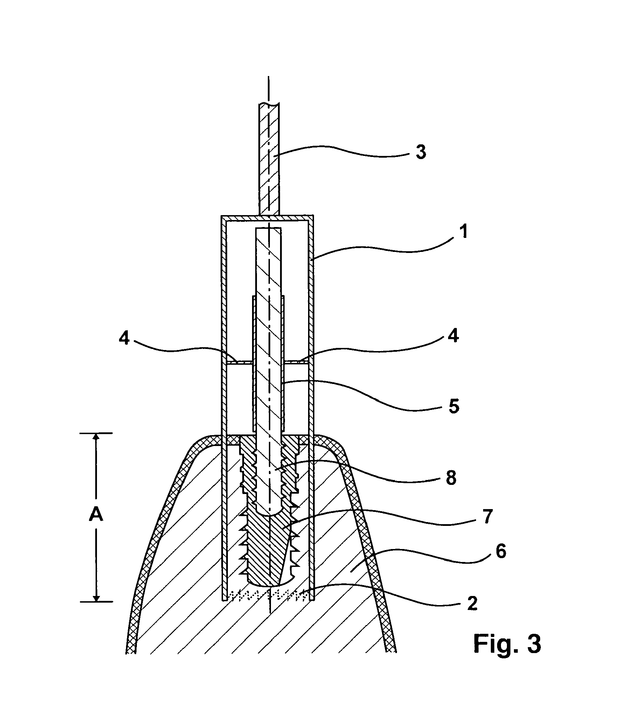

Zunächst wird der Führungsstift 8 in das Dentalimplantat 7 eingesetzt (Fig. 1), so dass der Führungsstift 8 koaxial zum Dentalimplantat 7 angeordnet ist. Anschließend wird der Trepanbohrer 1 mit dem koaxial darin angebrachten Führungselement 5 über den Führungsstift 8 geführt, so dass der Führungsstift 8 in das Innere des Führungselementes 5 hineingelangt (Fig. 2). Durch das Zusammenspiel von Führungsstift 8 und Führungselement 5 wird der Trepanbohrer 1 koaxial zum Dentalimplantat 7 ausgerichtet. Wird nun der Bohrvorgang durchgeführt, so wird der Trepanbohrer 1 durch das Zusammenspiel von Führungsstift 8 und Führungselement 5 zuverlässig koaxial zum Dentalimplantat 7 geführt (Fig. 3). Nach Abschluss der Bohrung wird der Trepanbohrer 1 aus dem Kieferknochen 6 herausgeführt. Zuletzt wird dann das Dentalimplantat 7 entnommen, wobei erst noch der Knochen and der Stirnseite des Dentalimplantates 7 gelöst werden muss.

Bei der hier dargestellten ersten Ausführungsform gemäß den Fig. 1 bis 4 ist der lichte Durchmesser des Bohrers 1 etwa 1 mm bis 6 mm, vorzugsweise 3 mm größer, als der größte Außendurchmesser des Dentalimplantates 7. Hierdurch ist es möglich das Dentalimplantat 7 zusammen mit der das Implantat umgebenden Knochensubstanz 6 zu entnehmen. Ein solches Dentalimplantat 7 kann dann an einer anderen Stelle, zum Beispiel an einer Stelle mit nur wenig Knochensubstanz wieder implantiert werden.

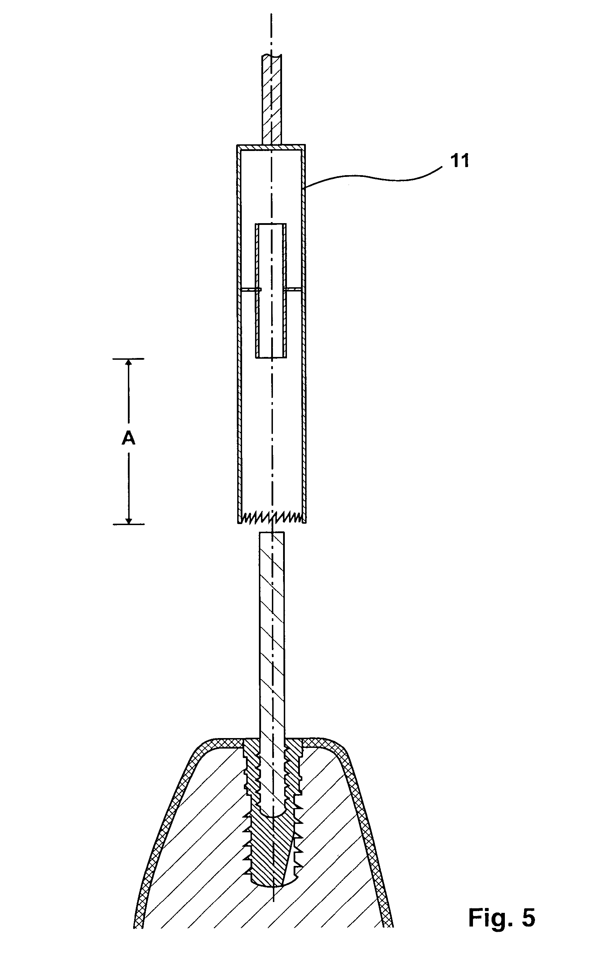

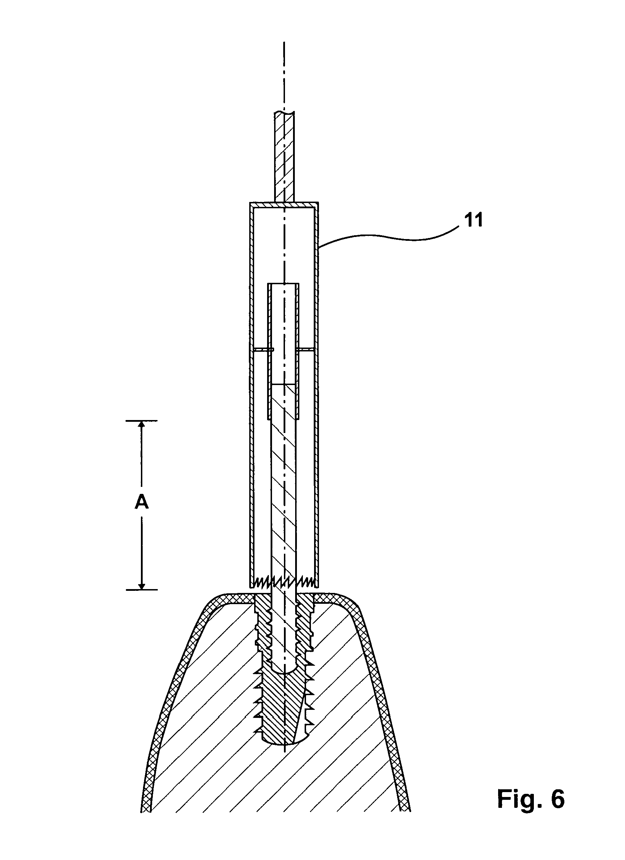

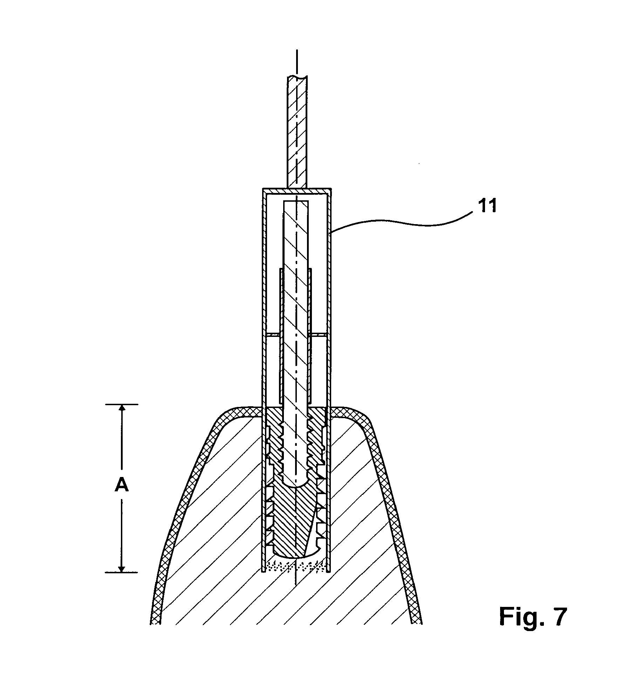

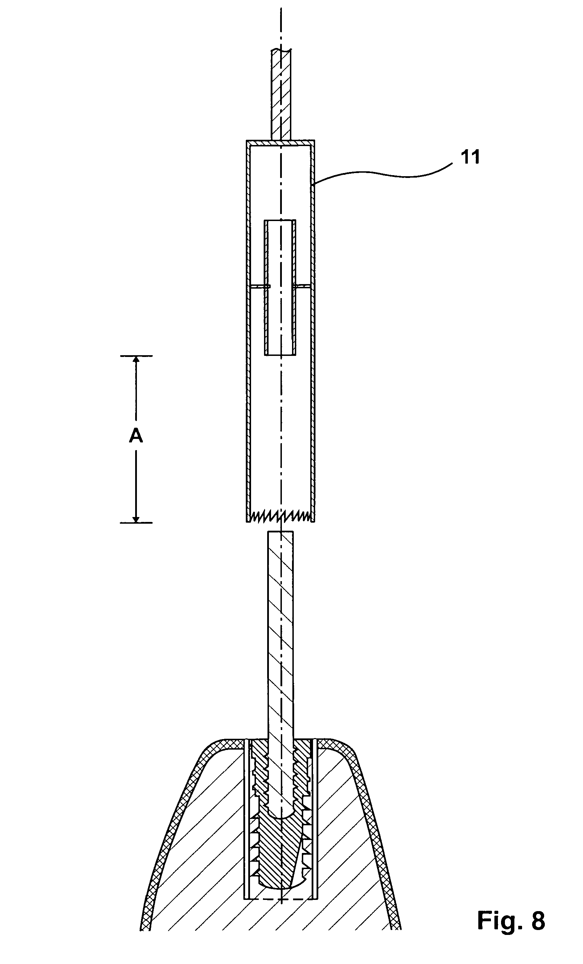

Die zweite Ausführungsform gemäß den Fig. 5 bis 8 unterscheidet sich gegenüber der ersten Ausführungsform nur dadurch, dass hier der Durchmesser des Trepanbohrers 11 nur minimal größer als der größte Außendurchmesser des Dentalimplantates ist. Hierdurch kann das Dentalimplantat exakt, das heißt mit nur minimalen Knochenanteilen, ausgebohrt werden. Ein solcher Trepanbohrer 11 wird typischerweise gewählt, wenn das Implantat nicht wieder verwendet werden soll.

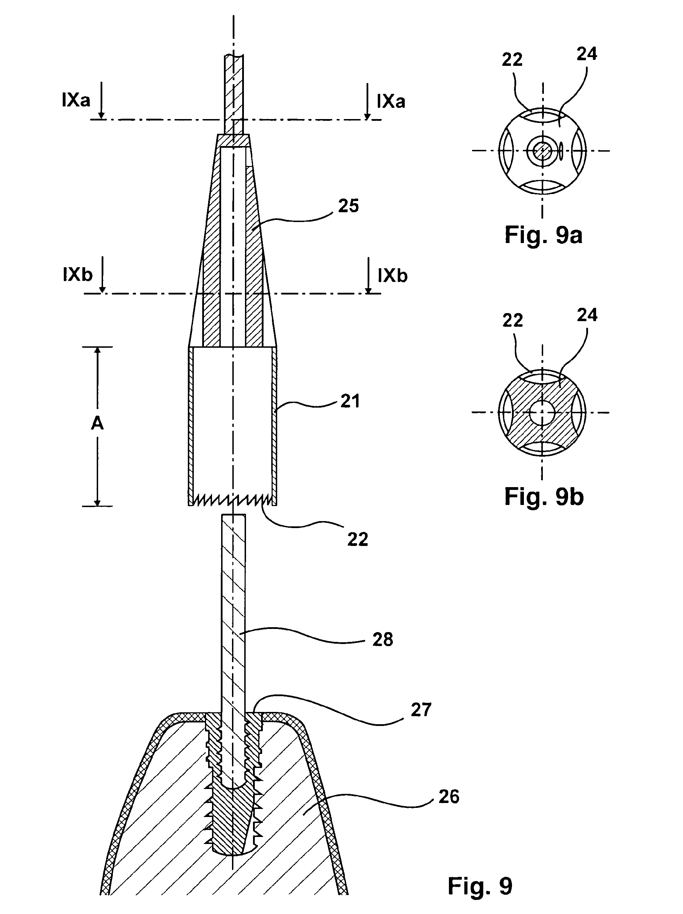

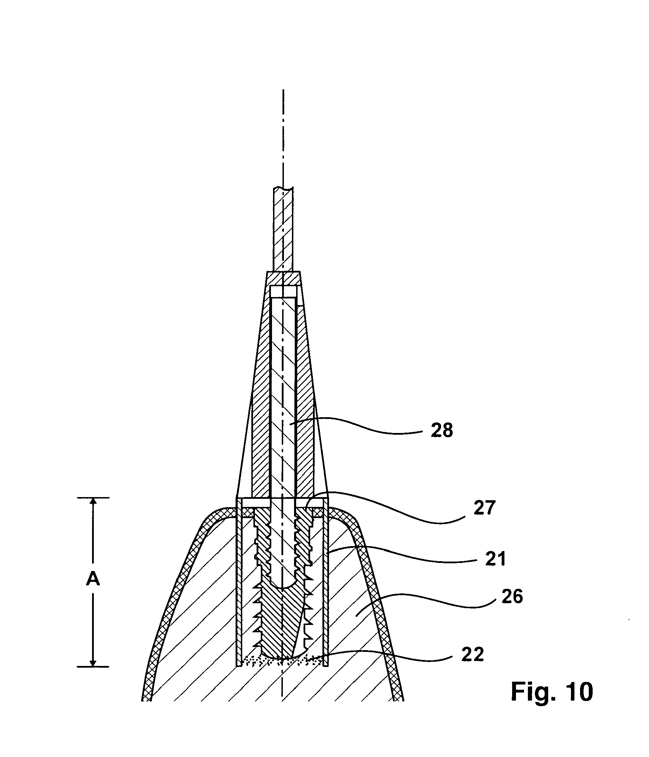

In den Fig. 9 bis 10 ist eine dritte Ausführungsform der erfindungsgemäßen Vorrichtung dargestellt. Auch hier ist ein Implantat 27 in einen Kieferknochen 26 eingelassen, wobei in das Implantat 27 ein Führungsstift 28 eingesetzt ist. Oberhalb des Trepanbohrers 21 ist ein hohlzylindrisches Führungselement 25 angebracht, welches über vier Stege 24 am Trepanbohrer 21 gehalten ist. Auch dieser Trepanbohrer 21 besitzt an seiner Stirnseite eine Bohrschneide 22.

Im Unterscheidet zur ersten Ausführungsform gemäß den Fig. 1 bis 4 ist hier das Führungselement 25 außerhalb des Trepanbohrers 21 angeordnet, ist aber ebenfalls hohlzylindrisch zur Aufnahme des Führungsstiftes 28 ausgebildet. Im Übrigen entspricht diese dritte Ausführungsform der in den Fig. 1 bis 4 dargestellten ersten Ausführungsform.

Bei der in den Fig. 11 bis 12 dargestellten vierten Ausführungsform wird im Gegensatz zu den ersten drei Ausführungsformen ein handelsüblicher Trepanbohrer 32 verwendet, der über eine Bohreraufnahme 33 angetrieben wird und ebenfalls eine Bohrschneide 32 besitzt. In dieser Ausführungsform kommt anstelle des in das Implantat 37 einsetzbaren Führungsstiftes ein Führungszylinder 35 zum Einsatz. Dieser Führungszylinder 35 ist über eine Aufnahme, hier ein Gewinde, im Implantat 37 befestigbar.

Oberhalb des Implantates 37 sind am Führungszylinders 35 zwei Führungsflächen 39 und 39' ausgebildet. Im Bereich dieser Führungsflächen 39 und 39' ist der Führungszylinder 35 zylindrisch ausgeführt, während der Führungszylinder 35 im Bereich zwischen den Führungsflächen 39 und 39' eine Hohlkehle 40 aufweist, so dass die Führungsflächen 39 und 39' durch die Hohlkehle 40 beabstandet sind. Im Bereich der Führungsflächen 39 und 39' entspricht der Außendurchmesser des Führungselementes 35 im wesentlichen dem lichten Innendurchmesser des Trepanbohrers 31, so dass der Führungszylinder 35 in den Trepanbohrer 31 einführbar ist und diesen während des Bohrvorganges koaxial zum Implantat 37 führt.

Benutzt der behandelnde Arzt einen Trepanbohrer und einen Führungszylinder, deren Durchmesser dem Durchmesser des Implantates entspricht, so wird das Implantat ohne Knochensubstanz ausgebohrt. Benutzt er hingegen einen Trepanbohrer und einen Führungszylinder mit einem Durchmesser größer als das Implantat, so wird mit dem Implantat zusammen auch entsprechend Knochensubstanz mit ausgebohrt, die an anderer Stelle wieder implantiert werden kann.

Jeder Implantathersteller bildet sie Aufnahme seines Implantates individuell aus. Dies kann, wie hier dargestellt ein Gewinde sein, dies kann aber auch anders gelöst werden. Es versteht sich, dass die Befestigungsmittel des Führungsstiftes bzw. des Führungszylinders entsprechend der Aufnahme des Implantates ausgeführt ist und nicht wie in diesen Ausführungsformen ein Gewinde sein muss.

In einer anderen, hier nicht dargestellten Ausführungsform kann der Trepanbohrer mit einer Ultraschall-Schneidvorrichtung oder mit einer Piezo-Schneidvorrichtung ausgestattet sein

## Patentansprüche

1. Vorrichtung zum Explantieren eines Dentalimplantates aus einem menschlichen oder tierischen Knochen, mit einem Trepanbohrer (1), an dessen Stirnseite eine Bohrschneide (2) ausgebildet ist,
**gekennzeichnet durch**
einen am Dentalimplantat (7) anbringbaren Führungsstift (8) und **durch** ein am Trepanbohrer (1) angebrachtes Führungselement (5), wobei das Führungselement (5) derart mit dem Führungsstift (8) zusammenwirkt, dass der Trepanbohrer (1) in Axialrichtung des Führungsstiftes (8) geführt wird.

2. Vorrichtung nach Anspruch 1,
**dadurch gekennzeichnet,**
**dass** das Führungselement (5) hohlzylindrisch ausgebildet ist, wobei die lichte Weite des Führungselementes (5) korrespondierend zum Durchmesser des Führungsstiftes (8) gewählt ist.

3. Vorrichtung nach wenigstens einem der vorangehenden Ansprüche,
**dadurch gekennzeichnet,**
**dass** das Führungselement (5) koaxial im Inneren des Dentalbohrers (1) gehalten ist und dass der Führungsstift (8) koaxial zum Trepanbohrer (1) im Dentalimplantat (7) gehalten ist.

4. Vorrichtung nach Anspruch 3,
**dadurch gekennzeichnet,**
**dass** das Führungselement (5) über drei bis acht, vorzugsweise vier Stege (4) im Trepanbohrer (1) gehalten ist.

5. Vorrichtung nach wenigstens einem der vorangehenden Ansprüche,
**dadurch gekennzeichnet,**
**dass** der Führungsstift (8) bereits bis in das Führungselement (5) hineinreicht, wenn der Trepanbohrer (1) am Kieferknochen (6) anliegt.

6. Vorrichtung nach einem der vorangehenden Ansprüche,
**dadurch gekennzeichnet,**
**dass** der Abstand A des Führungselementes (5) von der Bohrschneide (2) im Wesentlichen der Länge des Dentalimplantates (7) entspricht.

7. Vorrichtung nach einem der Ansprüche 1 bis 6,
**dadurch gekennzeichnet,**
**dass** der Abstand A des Führungselementes (5) von der Bohrschneide (2) mindestens der Länge des Dentalimplantates (7) entspricht.

8. Vorrichtung zum Explantieren eines Dentalimplantates aus einem menschlichen oder tierischen Knochen, mit einem Trepanbohrer (31), an dessen Stirnseite eine Bohrschneide (32) ausgebildet ist,
**gekennzeichnet durch**
einen am Dentalimplantat (37) anbringbaren Führungszylinder (35) wobei der Führungszylinder (35) mindestens eine koaxial umlaufende, zylindrische Führungsfläche (39') aufweist, deren Außendurchmesser A korrespondierend zum Innendurchmesser I des Trepanbohrers (31) ausgelegt ist.

9. Vorrichtung nach Anspruch 8,
**gekennzeichnet durch**
eine zweite Führungsfläche (39), die axial beabstandet von der ersten Führungsfläche (39') angeordnet ist.
